# EUROPEAN PATENT APPLICATION

(11) **EP 0 869 295 A2**
(43) Date of publication of application: **07.10.1998**
(21) Application number: 98302555.2
(22) Date of filing: 01.04.1998
(51) Int. Cl.: F16H 1/16, F16H 55/14

(54) **Motor assembly with reduction gear**

(30) Priority: 02.04.1997 JP 83187/97
(71) Applicant: MABUCHI MOTOR KABUSHIKI KAISHA, Matsudo-shi, Chiba-ken (JP)
(72) Inventor: Nakahashi, Hiroaki, Matsudo-shi, Chiba-ken (JP); Itaya, Hideki, Matsudo-shi, Chiba-ken (JP); Yamamoto, Kazuyuki, Matsudo-shi, Chiba-ken (JP); Fujii, Takuya, Matsudo-shi, Chiba-ken (JP); Kurata, Junya, Matsudo-shi, Chiba-ken (JP)
(74) Representative: Hitchcock, Esmond Antony

(57) **Abstract**

A small motor reduction gear assembly has a reduction gear section 21 and a motor section 20. An output shaft 1 is offset in the direction toward a worm 3, making the offset distance slightly shorter than the normal distance between the shafts of the worm 3 and the worm wheel 4, taking advantage of the resiliency of a cushioning member 12 housed in the reduction gear section worm wheel 4. An end bell 27 of the motor section 20 housing a shaft bearing 26 is fitted into a cylindrical part 9 provided on the reduction gear section gear case 7. A motor shaft guide 5 for reducing the deformation of the motor shaft 6 is provided, and complementary ribs are provided on the worm wheel 4 and on the reduction gear section gear case 7.

## Description

This invention relates to a motor assembly in which a small motor is coupled to a reduction gear. Such assemblies have particular, but not exclusive, application in motor vehicles where they can be used to operate windows.

In known motor assemblies of the kind to which this invention relates, a small electric motor has an extended shaft connected to a worm in the reduction gear section in mesh with a worm wheel which is itself coupled to the output shaft. Three bearings are used to support the shaft, two on the motor side and one in the reduction gear section. While this assembly can function quite satisfactorily, there do remain difficulties in ensuring reliable engagement between the worm and the worm wheel, and the shape of the motor shaft. The present invention seeks to address these problems. As in the prior art, a motor assembly according to the present invention comprises a small motor section coupled to a reduction gear section, with a motor shaft extending from the motor section and connected to a worm in the reduction gear section. A worm wheel is in mesh with the worm, and coupled to an output shaft. In a primary feature of the invention, the worm is coupled to the output shaft via a cushioning member, and the output shaft is offset towards the axis of the worm. The cushioning member may be resiliently compressed between the worm and the worm wheel, and is typically housed within the body of the worm wheel.

With the above assembly, the engagement between the worm and the worm wheel is improved, minimizing the risk of backlash, and also reducing torque transmission losses and gear noise. It facilitates the production of a low-cost and high-precision motor assembly because it enables proper alignment between the worm and worm wheel to be maintained automatically. Particularly, it enables the worm wheel to be fitted after the motor section and worm have been assembled in the gear case without requiring strict dimensional accuracy of parts.

In another aspect of the invention, a motor shaft guide is housed in the gear case of the reduction gear section, the gear case being fixably attached to the motor section. This provides additional support for the motor shaft which typically extends from a bearing in an end bell of the motor section to a bearing at its distal end in the gear case. The shaft guide can be housed in a cylindrical part of the gear case, and this cylindrical part may itself receive a portion of the end bell in which the central motor shaft bearing is housed in the motor section.

Preferred assemblies according to the invention including this feature include a shaft guide that opens towards the axis of the worm wheel, and has a predetermined length in the axial direction of the motor shaft to hold it from the other side. Typically, the shaft guide is located substantially equidistant between the central bearing for the motor shaft and the worm.

The use of a shaft guide as described above can ensure stable and positive engagement between the worm and worm wheel regardless of size of load, as the motor shaft can be supported without any deflection caused by the radial forces generated by such engagement. At the same time, the motor section itself can be used and stocked as an independent unit. It will also be appreciated that this feature enables the use of slender motor shafts, and it also protects resin worm wheels from being damaged. It also facilitates the high precision assembly of the motor and reduction gear combination.

In yet another feature of the invention, complementary circular ribs are formed respectively on the reduction gear section and the worm wheel. This provides radial reinforcement relative to the axis of the worm wheel restricting translational movement of the worm wheel away from the worm. Typically, one of the circular ribs, usually the rib on the reduction gear section gear case, is discontinuous. A cushioning member can serve to urge the worm wheel into the gear case to ensure that the respective circular ribs are pivotally positioned relative to one another. In any event, the ribs are preferably disposed as near as possible to the point at which the worm and worm wheel engage.

This feature facilitates the design of the assembly particularly with regard to the spacing between the respective shafts of the worm and worm wheel as it can be based on the rib position, with smaller absolute measurements than in the prior art.

From the above it will be appreciated that the invention seeks to provide a motor assembly of the kind described which can reduce the module of the worm and worm wheel, and therefore the size of the entire assembly, while improving durability and reducing gear noise by improving the engaging accuracy of the worm and wheel.

A motor assembly of known construction, and an embodiment of the invention, will now be described by way of example, and with reference to the accompanying schematic drawings, wherein:
Figure 1 is a longitudinal sectional view of a small electric motor with reduction gear forming an assembly embodying this invention;
Figure 2 is a cross-sectional view taken on line I-I in Figure 1;
Figure 3 shows an output plate, a worm wheel and a cushioning member of the motor assembly shown in Figure 1;
Figure 4 is a detail view of the central bearing and motor shaft guide in the assembly of Figure 1 with a cross-sectional view taken substantially along line A-A;
Figure 5 illustrates the gear engagement in the assembly of Figure 1;
Figure 6 is a longitudinal sectional view of a known assembly of a small electric motor and reduction gear;
Figure 7 is a cross-sectional view taken on line X-X in Figure 6, and
Figure 8 illustrates the gear engagement in the assembly of Figure 6.

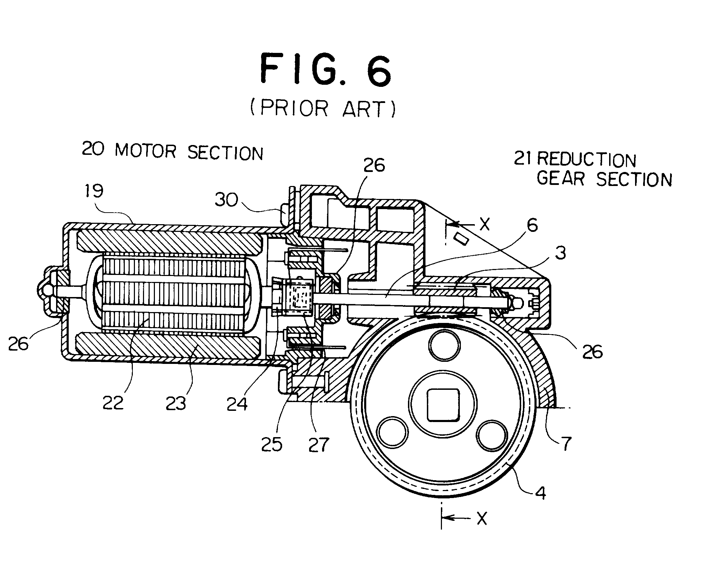

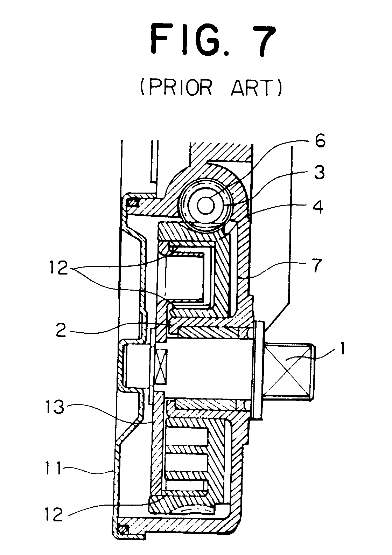

A conventional type of small motor with reduction gear will first be described with reference to Figures 6 and 7 As shown, a small motor section 20 is assembled integrally with a reduction gear section 21. The motor section 20 comprises a rotor 22, a magnet 23, a commutator 24, brushes 25, two bearings 26, a motor case 19, an end bell 27, and a motor shaft 6 extended from the motor inside to the outside. The reduction gear section 21 houses in a gear case 7 a worm 3 connected to the motor shaft 6, and a worm wheel 4 in mesh therewith. As shown in Figure 7, a cushioning member 12 is housed in the worm wheel 4, and an output plate 13 and an output shaft 1 are connected to the worm wheel 4 via the cushioning member 12. The worm wheel 4 is thus centred and supported by the outer circumference of an output shaft bearing boss 2 of the gear case 7. In this type of assembly, the motor section 20 is installed on the gear base 7 via mounting bolts 30. A total of three bearings 26 are required to support the rotating part of the motor section 20, two on the motor side and one on the side of the gear case 7. The bearing located at the centre in particular, is housed in the motor section end bell 27 which is held between the motor section 20 and the reduction gear section 21.

There have been some problems with assemblies of the kind described above. Firstly, the conventional construction inevitably involves some clearance (backlash) due to aggravated dimensional accuracy (deformation) of parts and assembly errors, and misalignment of the worm and the worm wheel. This can lead to poor engagement between the worm and the worm wheel, which could in turn cause the difficulty in reducing the module of the worm and the worm wheel, increased torque transmission losses, increased gear wear, lowered durability and increased gear noise.

Secondly, the construction can provide insufficient strength in the motor section end bell 27 to hold the bearing 26, and lead to difficulty in preventing the motor shaft 6 from being deformed particularly when a slender motor shaft 6 is used. The deformation of the motor shaft 6 subjected to a high load could aggravate the engagement between the worm 3 and the worm wheel 4, resulting in damage to the worm wheel 4, particularly one made of a resin material. In addition, this known assembly has some limitation in maintaining accuracy in assembling the motor section 20 and the reduction gear section 21. To meet this, a method of supporting a bearing provided at the centre of the motor shaft by the gear case has been proposed in Japanese published Utility Model Application No. Hei-4(1992)-5549. This proposal involves inserting the motor shaft into a metal ball serving as a bearing and press-fitting the worm gear to the motor shaft before the entire unit is assembled. The motor section itself cannot be used as a small motor nor stocked as an independent unit.

This type of motor assembly has the worm wheel 4 orthogonally enmeshed with the worm 3. The distance between the shafts of the worm and the worm wheel, which is critical to ideal gear engagement, tends to be unstable due to variability in the dimensional accuracy of the gear case, variability in the dimensional accuracy of the worm wheel, and fluctuations in the clearance between the worm wheel and the gear case bearing part. Where the reaction force exerted on the worm wheel is met only by the gear case bearing there is a risk of deflection of the worm wheel when a load is applied, leading to failure of ideal gear engagement.

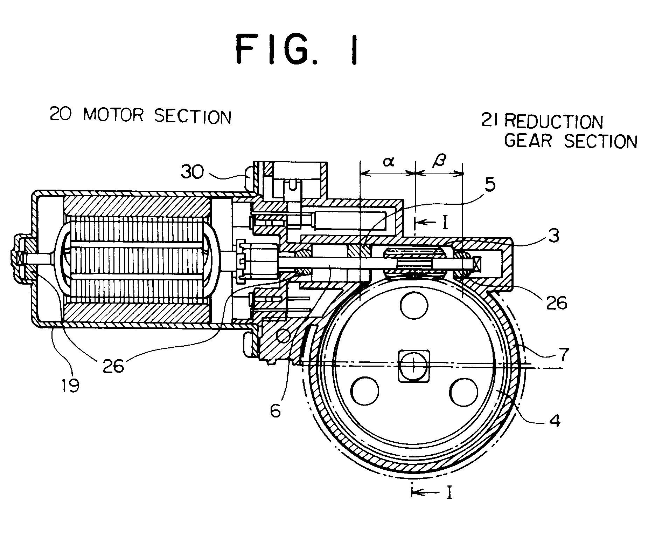

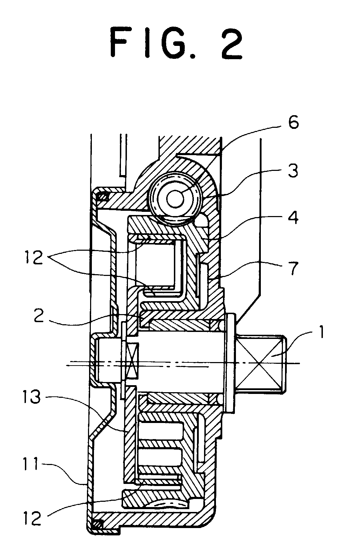

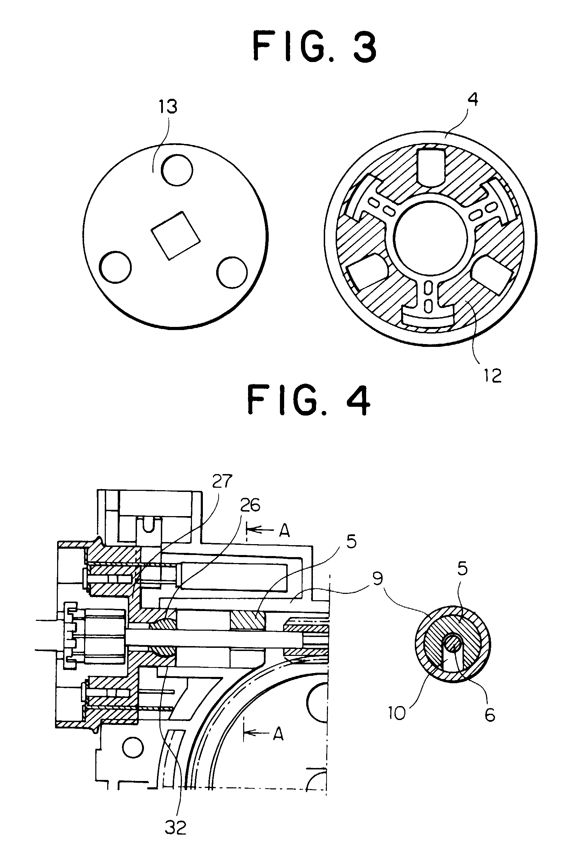

The small motor and reduction gear assembly shown in Figures 1 to 5 comprises a motor section 20 and a reduction gear section 21. The motor section 20 itself is the same as that used in the known type shown in Figure 6, except for the construction of a bearing in an end bell the details of which are shown in Figure 4. The reduction gear section 21 houses a worm 3 connected to a motor shaft 6, a worm wheel 4 in mesh therewith, etc., in a gear case 7. As shown in Figure 2, a cushioning member 12 is housed in the worm wheel 4, which connects an output plate 13 and an output shaft 1 via the cushioning member 12.

As indicated in Figure 1, the output shaft 1 is offset in the direction toward the worm 3, making the distance between the output shaft and the shaft of the worm 3 slightly smaller than the normal distance between the shafts of the worm 3 and the worm wheel 4. In other words, the engagement between the worm wheel 4 and the worm 3 is improved by offsetting the output shaft 1 in such a manner that the worm wheel 4 is urged onto the worm 3, taking advantage of the support by the resiliency of the cushioning member 12.

The worm wheel 4 is housed in the gear case 7, and the cushioning member 12 is housed in the worm wheel 4, as described above. The cushioning member 12 is made of a resilient body, such as synthetic rubber. The rotation of the motor shaft 6 is transmitted to the output plate 13 connected via the cushioning member 12 and the output shaft 1 via the worm 3 and the worm wheel 4. In other words, the transmission includes and relies on the resiliency of the cushioning member 12. In the embodiment described, the centre of the cover 11 and the gear case output shaft bearing boss 2, and therefore the centre of the output shaft 1, is offset in the direction toward the worm 3, or in the upward direction in Figures 1 and 2, making the distance between the output shaft 1 and the shaft of the worm 3 slightly smaller than the normal distance between the shafts of the worm 3 and the worm wheel 4. Typically, this offset distance is approximately 0.1mm compared with 29.5mm being the distance between the shafts of the worm 3 and
the worm wheel 4.

This arrangement, in which the worm wheel 4 is supported by the resiliency of the cushioning member 12 in such a manner that the worm wheel 4 is forced to the worm 3, can eliminate tooth surface clearance (backlash) between the worm 3 and the worm wheel 4, leading to reduced torque transmission loss, improved durability and reduced gear noise. Further, it can provide a high-precision small motor with reduction gear at low cost because the worm 3 and the worm wheel 4 can be automatically aligned without requiring strict dimensional accuracy of each part. The worm wheel 4 can also be assembled after the motor section and the worm have been fitted in the gear case.

The assembly shown in Figures 1 to 5 has a total of three bearings, two on the side of the motor, and one on the side of the reduction gear. The construction of the central bearing can be improved by coaxially fitting the bearing 26 provided in an end bell of the motor section 20 to a cylindrical part 9 of the gear case 7 of the reduction gear section, and by providing a motor shaft guide to prevent the deformation of the motor shaft.

As shown in Figure 1, a flange part of the motor case 19 and a side surface of the gear case 7 are assembled integrally with mounting bolts 30. A portion 32 on which the bearing 26 in the end bell 27 is mounted is fixedly fitted into the cylindrical part 9 of the gear case 7. This reduces the deformation of the motor shaft, improves engagement between the worm 3 and the worm wheel 4, reduces the risk that the worm wheel made of resin might be damaged, and enables easy and accurate assembly. As shown in detail in Figure 4, a motor shaft guide 5 is provided on the motor shaft 6 between the worm 3 and the bearing 26 in the end bell 27. The motor shaft guide has an opening 10 that opens downward, as shown, and a predetermined length in the axial direction to hold the motor shaft from above. With this construction, any deformation of the motor shaft 6 caused by the reaction force generated by the worm 3 and the worm wheel 4 under high load and restraint is minimised, and engagement between the worm 3 and the worm wheel 4 is improved. Further, deformation of the motor shaft during the regular and reversed rotation of the worm wheel 4 can be minimised to substantially the same degree by installing the motor shaft guide 5 at a location that makes the distance β between the bearing 26 at an end of the motor shaft in the gear case and the worm 3 almost equal to the distance α between the motor shaft guide 5 and the worm 3.

The motor shaft guide 5 may be a sintered oil-impregnated bearing, or may be made of a resin material, such as polyacetal. The motor shaft guide 5 does not make sliding contact with the shaft under no load or low load, and performs the function of preventing the motor shaft from being deformed by the reaction force caused by the worm 3 and the worm wheel 4 under high load and restraint.

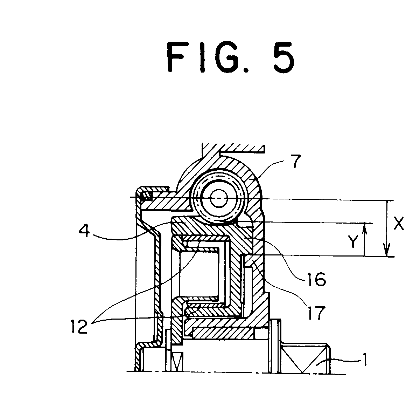

As shown in Figure 5, a continuous or discontinuous raised rib 17 around the rotating centre of the output shaft 1 is provided on the internal surface of the gear case 7, and a circular raised rib 16 is also provided on the surface of the worm wheel facing the rib 17. As the worm wheel 4 is caused to rotate by the worm 3 and receives a reaction force, the raised rib 16 is caused to rotate while making sliding contact with the raised rib 17. Both the raised ribs 16 and 17 are disposed at the nearest possible radial locations to the location at which the worm 3 is in mesh with the worm wheel 4.

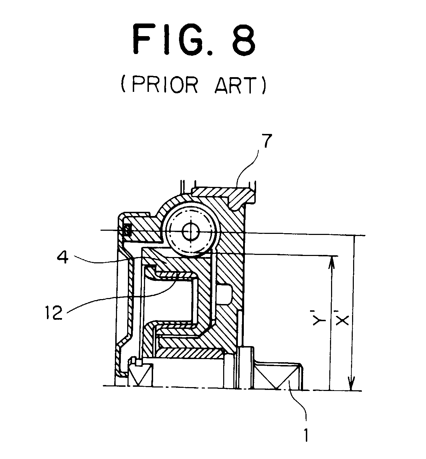

With this construction, since dimensions requiring accuracy are X between the worm shaft centre and the rib in the gear case 7, and Y between the worm wheel tooth surface and the rib, control of accuracy is relatively easy. In short, dimension X' from the output shaft centre to the worm shaft centre, and dimension Y' from the output shaft centre to the worm wheel tooth surface (Figure 8) have to be manufactured and assembled with high accuracy with the known construction having no raised ribs, while control of accuracy is easy with this invention because accuracy can be controlled with smaller absolute dimensions than those in the prior art, based on the rib position.

As described above, the worm wheel 4 can be easily positioned in the axial direction of the output shaft because a cushioning member provided between the worm wheel 4 and the output shaft 1 forces the worm wheel 4 onto the gear case 7 constituting the frame of the reduction gear section 21.

As described herein, this invention, in which engagement between the worm and the worm wheel is improved, makes it possible to attain high output that has not hitherto been obtained even with gears of a small module. In a typical embodiment of the invention the worm and worm wheel have a module of 0.5∼0.7, a reduction gear ratio of 65∼90, a pressure angle of 11°∼20°, a contact ratio of 2.5∼3.5, and a lead angle of 4°∼6°.

## Claims

1. A motor assembly comprising a small motor section (20) coupled to a reduction gear section (21) with a motor shaft (6) extending from the motor section (20) and connected to a worm (3) in the reduction gear section (21) ; and a worm wheel (4) in mesh with the worm (3) and coupled to an output shaft (1),
characterized in that
the worm wheel (4) is coupled to the output shaft (1) via a cushioning member (12), and the output shaft (1) is offset towards the axis of the worm (3).

2. An assembly according to Claim 1, wherein the cushioning member is resiliently compressed between the output shaft (1) and the worm wheel (4).

3. An assembly according to Claim 1 or Claim 2, wherein the cushioning member (12) is housed in the worm wheel (4).

4. An assembly according to any preceding claim, including a motor shaft bearing (26) mounted in an end bell (27) in the motor section (20) and a motor shaft guide (5) between the end bell (27) and the worm (3) on the motor shaft (6), the shaft guide (5) being housed in a cylindrical part (9) of a gear case (7) in the reduction gear section (21), the gear case (7) being fixedly attached to the motor section (20).

5. An assembly according to Claim 4, wherein a portion of the end bell (27) is fitted into the cylindrical part (9) of the gear case (7).

6. An assembly according to any preceding claim, wherein complementary circular ribs (17, 16) are formed respectively on the reduction gear section (21) and the worm wheel (4) whereby reaction forces generated by the intermesh radially relative to the axis of the worm wheel (4) are borne by the rib (17) on the reduction gear section (21).

7. An assembly according to Claim 6, wherein one of the circular ribs is discontinuous.

8. An assembly according to Claim 6 or Claim 7, wherein the worm wheel (4) is urged by the cushioning member (12) into a case (7) of the reduction gear section (21) positioned in the axial direction of the output shaft (1).

9. A motor assembly comprising a small motor section (20) coupled to a reduction gear section (21) with a motor shaft (6) extending from the motor section (20) and connected to a worm (3) in the reduction gear section (21); and a worm wheel (4) in mesh with the worm (3) and coupled to an output shaft (1),
characterized in that
the motor shaft (6) is supported in a bearing (26) mounted in an end bell (27) in the motor section (20) and a motor shaft guide (5) between the end bell (27) and the worm (3) on the motor shaft (6), the shaft guide (5) being housed in a cylindrical part (9) of a gear case (7) in the reduction gear section (21), the gear case (7) being fixedly attached to the motor section (20).

10. An assembly according to Claim 9, wherein complementary circular ribs (17, 16) are formed respectively on the reduction gear section (21) and the worm wheel (4) whereby reaction forces generated by the intermesh radially relative to the axis of the worm wheel (4) are borne by the rib (17) on the reduction gear section (21).

11. An assembly according to Claim 10, wherein the worm wheel (4) is urged by a cushioning member (12) into a case (7) of the reduction gear section (21) positioned in the axial direction of the output shaft (1).

12. An assembly according to any of Claims 9 to 11, wherein the distance between a bearing (26) at the distel end of the motor shaft (6) and the worm (3) is substantially equal to the distance between the shaft guide (5) and the worm (3).

13. A motor assembly comprising a small motor section (20) coupled to a reduction gear section (21) with a motor shaft (6) extending from the motor section (20) and connected to a worm (3) in the reduction gear section (21); and a worm wheel (4) in mesh with the worm (3) and coupled to an output shaft (1),
characterized in that
complementary circular ribs (17, 16) are formed respectively on the reduction gear section (21) and the worm wheel (4) whereby reaction forces generated by the intermesh radially relative to the axis of the worm wheel (4) are borne by the rib (17) on the reduction gear section (21).

14. An assembly according to Claim 13, wherein the worm wheel (4) is urged by a cushioning member (12) into a case (7) of the reduction gear section (21) positioned in the axial direction of the output shaft (1).

15. An assembly according to Claim 13 or Claim 14, wherein one of the circular ribs is discontinuous.

16. An assembly according to any preceding claim, wherein the worm (3) and the worm wheel (4) have a module of 0.5 to 0.7, a reduction gear ratio of 65 to 90, a pressure angle of 11° to 20°, a contact ratio of 2.5 to 3.5, and a lead angle of 4° to 6°.
